# EUROPÄISCHE PATENTSCHRIFT

(11) **EP 2 614 203 B1**
(45) Veröffentlichungstag und Bekanntmachung des Hinweises auf die Patenterteilung: **06.04.2016**
(21) Anmeldenummer: 11761525.2
(22) Anmeldetag: 23.08.2011
(51) Int. Cl.: E05F 11/48

(54) **SEILUMLENKSTÜCK FÜR EINEN SEILFENSTERHEBER**
CABLE DEFLECTOR FOR A CABLE WINDOW REGULATOR
DEVIATEUR POUR CABLE POUR LÈVE-VITRE À CÂBLE

(30) Priorität: 08.09.2010 DE 202010012567 U
(43) Veröffentlichungstag der Anmeldung: 17.07.2013
(73) Patentinhaber: Brose Fahrzeugteile GmbH & Co. KG, Hallstadt, 96103 Hallstadt (DE)
(72) Erfinder: DEBUS, Bruno, F-94370 Sucy (FR); DALLOS, Christian, 96103 Hallstadt (DE); KINNELL, Craig, 96450 Coburg (DE)
(74) Vertreter: Maikowski & Ninnemann
(86) Internationale Anmeldenummer: PCT/EP2011/064452
(87) Internationale Veröffentlichungsnummer: WO 2012/031888

(56) Entgegenhaltungen:
- DE-A1- 3 805 576
- US-A1- 2002 139 051
- US-A1- 2004 187 389

## Beschreibung

Die Erfindung betrifft ein Seilumlenkstück für einen Seilfensterheber gemäß dem Oberbegriff des Patentanspruchs 1.

Ein Seilfensterheber mit einer Führungsschiene, an deren Schienenkopf oder Schienenfuß ein derartiges Seilumlenkstück zu befestigen ist, ist aus der US 2002/0139051 A1 bekannt. Das Seilumlenkstück weist einen kreisförmigen Basiskörper auf, der bei der Montage und nach der Befestigung des Seilumlenkstücks am Schienenkopf oder Schienenfuß der Führungsschiene an einer Seite des Schienenkopfes oder Schienenfußes anliegt. Ein vom Basiskörper abstehender Zapfen mit radial abstehenden Vorsprüngen wird in eine Aussparung mit zu den Vorsprüngen passenden radialen Ausnehmungen des Schienenkopfes oder Schienenfußes eingesteckt, wobei der Zapfen und die Aussparung eine Montage-Drehachse ausbilden, um die das Seilumlenkstück bei der Montage des Seilumlenkstücks am Schienenkopf oder Schienenfuß der Führungsschiene drehbar ist. Eine Bohrung im Schienenkopf oder Schienenfuß der Führungsschiene und ein Stift am Seilumlenkstück bilden eine Verdrehsicherung, die in einer Montage-Endstellung nach einem Drehen des Seilumlenkstücks um die Montage-Drehachse die Verbindung des Seilumlenkstücks mit dem Schienenkopf oder Schienenfuß gegen ein Verdrehen des Seilumlenkstücks um die Montage-Drehachse sichert. Beim Verdrehen des Zapfens werden die Vorsprünge von den Ausnehmungen weggedreht und legen sich an die Außenfläche des Schienenkopfes oder Schienenfußes zur Sicherung der Anlage des Basiskörpers am Schienenkopf oder Schienenfuß senkrecht zur Längserstreckung der Führungsschiene an.

Aus der DE 38 05 576 C2 ist eine Befestigung für ein Seilumlenkstück an einer Führungsschiene eines Seil-Fensterhebers bekannt, bei der die Führungsschiene mit einer Ausnehmung versehen ist, in die ein vom Seilumlenkstück abstehender Haltevorsprung mit einer quer zur Längsrichtung der Führungsschiene vom Haltevorsprung abstehenden Nase eingesteckt wird, die einen Randabschnitt der Ausnehmung auf der vom Seilumlenkstück abgewandten Außenseite der Führungsschiene übergreift. Durch eine Schwenkbewegung des Seilumlenkstücks um den Randabschnitt in die Befestigungsstellung mit zur Längsrichtung der Führungsschiene paralleler Schwenkachse übergreift der Rastvorsprung einen Endrandabschnitt der Führungsschiene zur sperrenden Anlage an der Außenseite der Führungsschiene. Zur Sicherung des Seilumlenkstücks in der Befestigungsstellung greift bei in die Ausnehmung eingestecktem Haltevorsprung ein am Seilumlenkstück vorgesehener Rastvorsprung an einer Rast-Gegenfläche der Führungsschiene an, wobei eine im Rastvorsprung ausgebildete Federzunge eine Schwenkbewegung aus der Befestigungsstellung heraus blockiert.

Aus der DE 80 32 764 U1 ist ein Seilumlenkstück für einen Bowdenzug-Fensterheber bekannt, das zur Verbindung mit einer Führungsschiene des Fensterhebers auf ein Ende der Führungsschiene aufgesteckt wird und an seiner der Führungsschiene zugekehrten Seite einen hinterschnittenen Rastvorsprung aufweist, zwischen dem und dem Seilumlenkstück ein freier Spalt entsteht, der der Materialdicke der Führungsschiene entspricht. Der Rastvorsprung weist am Ende seiner Innenseite einen Vorsprung auf, der beim Aufstecken des Seilumlenkstücks auf das Ende der Führungsschiene in eine Ausnehmung der Führungsschiene eingreift und dadurch das Seilumlenkstück gegen ein Abziehen von der Führungsschiene sichert. Zusätzlich greift eine am Seilumlenkstück vom Rastvorsprung beabstandet angeordnete und hinterschnittene Nase beim Aufstecken des Seilumlenkstücks in die Ausnehmung der Führungsschiene ein und sichert dadurch das Seilumlenkstück nach dem Aufstecken auf die Führungsschiene gegen ein Verkippen.

Aufgabe der vorliegenden Erfindung ist es, ein Seilumlenkstück zu schaffen, das eine einfache und schnelle Montage beim Befestigen des Seilumlenkstücks am Schienenkopf oder Schienenfuß einer Führungsschiene ermöglicht und eine hohe Stabilität der Verbindung zwischen dem Seilumlenkstück und der Führungsschiene gewährleistet.

Diese Aufgabe wird erfindungsgemäß mit den Merkmalen des Anspruchs 1 gelöst.

Die erfindungsgemäße Lösung ermöglicht es, das Seilumlenkstück in gegenüber der Längserstreckung der Führungsschiene gekippter Stellung mit einem vom Basiskörper abstehenden Dreh- und Lagerzapfen in eine Dreh- und Lageröffnung des Schienenkopfes oder Schienenfußes einzustecken und damit eine exakte Vorpositionierung vorzunehmen, ohne dass ein Nachjustieren des Seilumlenkstückes zu dessen Befestigung am Schienenkopf oder Schienenfuß erforderlich ist. Durch anschließendes Drehen oder Schwenken des Seilumlenkstückes um die durch den vom Basiskörper abstehenden Dreh- und Lagerzapfen und die Dreh- und Lageröffnung am Schienenkopf oder Schienenfuß ausgebildete Montage-Drehachse wird in einer Montage-Endstellung eine Verdrehsicherung aktiviert, die die Verbindung des Seilumlenkstückes mit dem Schienenkopf oder Schienenfuß gegen ein ungewolltes Verdrehen des Seilumlenkstückes um die Montage-Drehachse sichert, und durch die am Basiskörper ausgebildete Einrichtung zur Sicherung der Anlage eine sichere, stabile Anlage des Basiskörpers am Schienenkopf oder Schienenfuß senkrecht zur Längserstreckung der Führungsschiene, d. h. sowohl in X-Richtung als auch insbesondere in Y-Richtung eines Kraftfahrzeugs bei einem in eine Kraftfahrzeugtür eingebauten Seilfensterheber, gewährleistet.

Durch die formschlüssige Verbindung des vom Basiskörper abstehenden Dreh- und Lagerzapfens mit der im Schienenkopf oder Schienenfuß ausgebildeten Dreh- und Lageröffnung wird das Seilumlenkstück gegen ein Abziehen vom Schienenkopf oder Schienenfuß gesichert, die Montage infolge einer exakten Führung des Seilumlenkstücks durch die Ausbildung der Montage-Drehachse erleichtert, durch die Verdrehsicherung eine unbeabsichtigte Demontage des Seilumlenkstückes von der Führungsschiene durch ein Zurückdrehen verhindert und durch die am Basiskörper ausgebildete Einrichtung zur Sicherung der Anlage des Basiskörpers am Schienenkopf oder Schienenfuß ein Verkippen des Seilumlenkstückes senkrecht zur Längserstreckung der Führungsschiene, d. h. senkrecht zur Führungsebene der Führungsschiene, verhindert. Infolge dieser mehrfachen Sicherung des Seilumlenkstückes, die durch eine einfache Montage mit einer Einsteck- und Schwenkbewegung bewirkt wird, ist eine auch unter Belastung sichere Verbindung des Seilumlenkstückes mit dem Schienenkopf oder Schienenfuß einer Führungsschiene gewährleistet.

Zur Erleichterung der Montage ist am Basiskörper des Seilumlenkstückes eine Anschlagfläche ausgebildet, die sich in der Montage-Endstellung an einen Teil der Endkante des Schienenkopfes oder Schienenfußes anlegt und damit ein weiteres Drehen oder Schwenken des Seilumlenkstückes um die Montage-Drehachse verhindert und einen Teil der auf das Seilumlenkstück beim Betrieb des Seilfensterhebers auftretenden großen Seilkräfte auf die Führungsschiene überträgt.

Vorzugsweise weist die Verdrehsicherung mindestens ein in den Basiskörper integriertes Rastelement auf, das nach einem Schwenken des Seilumlenkstückes um die Montage-Drehachse in der Montage-Endstellung in eine Rastaufnahme am Schienenkopf oder Schienenfuß einrastet.

Diese Ausbildung der Verdrehsicherung verhindert mit einem einfachen konstruktiven Mittel ein Zurückdrehen des Seilumlenkstückes in die Montage-Ausgangsstellung und sichert in Verbindung mit der am Basiskörper ausgebildeten Anschlagfläche das Seilumlenkstück gegen ein Verdrehen um die Montage-Drehachse in beiden Drehrichtungen.

Ein erstes Rastelement besteht aus einer vom Basiskörper abstehenden Rastnase mit einer Einführschräge und einer Rastkante, die in der Montage-Endstellung des Seilumlenkstückes an einer Rastkante einer als Rastaufnahme ausgebildeten Aussparung im Schienenkopf oder Schienenfuß der Führungsschiene anliegt

Alternativ, vorzugsweise aber in Ergänzung zum ersten Rastelement, ist ein zweites Rastelement vorgesehen, das aus einem aus einem vom Basiskörper abstehenden, elastisch biegbaren Rasthaken besteht, der bei der Befestigung des Seilumlenkstücks am Schienenkopf oder Schienenfuß der Führungsschiene durch Schwenken des Seilumlenkstückes um die Montage-Drehachse zumindest teilweise an einem ersten Seitenschenkel der Führungsschiene elastisch nachgebend entlang gleitet und in der Montage-Endstellung an einem Rastanschlag am Schienenkopf oder Schienenfuß der Führungsschiene anliegt.

Durch die Anordnung von insbesondere zwei Rastelementen ist ein hohes Maß an Verdrehsicherheit des Seilumlenkstücks gegeben, so dass auch beim Betrieb des Seilfensterhebers auftretende große Seilkräfte nicht dazu führen, dass das Seilumlenkstück aus der Montage-Endstellung oder Betriebsstellung verdreht wird und damit die Gefahr eines unbeabsichtigten Lösens der Verbindung des Seilumlenkstücks mit dem Schienenkopf oder Schienenfuß der Führungsschiene besteht.

Die Einrichtung zur Sicherung der Anlage des Basiskörpers am Schienenkopf oder Schienenfuß besteht erfindungsgemäß aus mindestens einem eine Endkante des Schienenkopfes oder Schienenfußes zumindest teilweise umgreifenden, vom Basiskörper ausgehenden Hintergriff.

Der Hintergriff ist in Verbindung mit der Anschlagfläche gegen ein Verkippen des Seilumlenkstückes in X-Richtung eines Kraftfahrzeugs und gegen ein Abziehen und Verkippen des Seilumlenkstückes in Y-Richtung eines Kraftfahrzeugs wirksam.

Dabei ist der Hintergriff so ausgebildet, dass er nach dem Einstecken des Dreh- und Lagerzapfen in die Dreh- und Lageröffnung in gegenüber der Längserstreckung der Führungsschiene gekippter Stellung des Seilumlenkstücks und vor dem Drehen oder Schwenken des Seilumlenkstücks um die Montage-Drehachse von der Endkante des Schienenkopfes oder Schienenfußes beabstandet ist und in der Montage-Endstellung die Endkante umgreift.

Auch die als Hintergriff ausgebildete Einrichtung zur Sicherung der Anlage des Basiskörpers am Schienenkopf oder Schienenfuß kann ein- oder mehrteilig ausgebildet sein, wobei insbesondere eine mehrteilige Ausbildung des Hintergriffs ein Lösen des Basiskörpers von der Anlage am Schienenkopf oder Schienenfuß gegen ein Verkippen in unterschiedliche Richtungen gegenüber der Anlagefläche des Schienenkopfes oder Schienenfußes verhindert und damit die sichere Anlage des Seilumlenkstückes in X- und insbesondere in Y-Richtung des in eine Kraftfahrzeugtür eingebauten Seilfensterhebers gewährleistet.

Ein erster, am Basiskörper ausgebildeter Hintergriff umgreift vorzugsweise die Endkante eines Mittelschenkels der Führungsschiene und liegt mit einem in der Montage-Endstellung parallel zur Endkante des Mittelschenkels verlaufenden Abschnitt an der dem Basiskörper entgegen gesetzten Seite des Schienenkopfes oder Schienenfußes der Führungsschiene an, wobei zwischen dem ersten Hintergriff und dem Basiskörper ein Schlitz zum Einführen der Endkante des Mittelschenkels der Führungsschiene vorgesehen ist.

Der erste Hintergriff sichert eine feste und dauerhafte Anlage des Basiskörpers und damit des Seilumlenkstücks am Schienenkopf oder Schienenfuß der Führungsschiene in Y-Richtung eines Kraftfahrzeugs, indem er die Endkante des Mittelschenkels der Führungsschiene umgreift, wobei der Schlitz zwischen dem Basiskörper und der Vorderseite des leistenförmigen ersten Hintergriffs die Endkante aufnimmt.

Alternativ oder vorzugsweise in Ergänzung zum ersten Hintergriff kann ein zweiter Hintergriff vorgesehen werden, der als ein vom Basiskörper abstehender Schenkel ausgebildet ist, der in der Montage-Endstellung eine von der Endkante des Mittelschenkels zum Rastanschlag des ersten Seitenschenkels unter einem stumpfen Winkel zur Endkante des Mittelschenkels verlaufende Abschrägung umgreift und in der Montage-Endstellung mit einem flächigen Abschnitt an der dem Basiskörper entgegen gesetzten Seite des Schienenkopfes oder Schienenfußes der Führungsschiene anliegt.

Da der zweite Hintergriff die Endkante des Schienenkopfes oder Schienenfußes der Führungsschiene im Bereich der Abschrägung umgreift, sichert er die Anlage des Seilumlenkstücks sowohl in Y-Richtung als auch die Einbettung des Basiskörpers des Seilumlenkstücks in das U-Profil der Führungsschiene und damit auch in X-Richtung des Kraftfahrzeugs.

Um eine Kollision des zweiten Hintergriffs mit der Führungsschiene beim Einsetzen des Dreh- und Lagerzapfens in die Dreh- und Lageröffnung in gekippter Stellung des Seilumlenkstücks zu verhindern, weist der zweite Hintergriff eine dem stumpfen Winkel der Abschrägung entsprechende schräge Kante auf, derart, dass beim Einstecken des Dreh- und Lagerzapfens des Seilumlenkstücks in die Dreh- und Lageröffnung am Schienenkopf oder Schienenfuß der Führungsschiene die schräge Kante im Wesentlichen parallel zur Abschrägung verläuft.

Dadurch ist insgesamt gewährleistet, dass in der Montage-Ausgangsstellung, in der das Seilumlenkstück in gekippter Lage zur Längserstreckung der Führungsschiene an die Führungsschiene angesetzt und der vom Basiskörper des Seilumlenkstücks abstehende Dreh- und Lagerzapfen in die Dreh- und Lageröffnung des Schienenkopfes oder Schienenfußes der Führungsschiene eingesteckt wird, der Hintergriff mit der Führungsschiene kollidiert. Erst beim Schwenken des Seilumlenkstücks um die durch den Dreh- und Lagerzapfen und die Dreh- und Lageröffnung gebildete Montage-Drehachse in die Montage-Endstellung kommt der Hintergriff zur Anlage an die dem Basiskörper entgegengesetzte Seite des Schienenkopfes oder Schienenfußes und sichert somit den Basiskörper vor einem Abziehen bzw. Verkippen senkrecht zur Führungsfläche der Führungsschiene.

Zur Erleichterung des Einführens des vom Basiskörper des Seilumlenkstücks abstehenden Dreh- und Lagerzapfens in die Dreh- und Lageröffnung am Schienenkopf oder Schienenfuß ist der Dreh- und Lagerzapfen mit einer endseitig umlaufenden Einführschräge versehen.

Neben dem als Montagehilfe dienenden und als Teil der Lagesicherung wirksamen Dreh- und Lagerzapfen sowie den die Verbindung des Seilumlenkstücks mit dem Schienenkopf oder Schienenfuß der Führungsschiene sichernden Rast- und Verriegelungselementen weist das Seilumlenkstück als Funktionselemente einen an den Endkanten eines Randschenkels und eines zweiten Seitenschenkels der aus einem ZU-Profil bestehenden Führungsschiene anliegenden Mitnehmer-Anschlag für einen entlang der Führungsschiene verstellbaren Mitnehmer des Seilfensterhebers, der vorzugsweise benachbart zu der am Basiskörper ausgebildeten, sich in der Montage-Endstellung an einen Teil der Endkante des Schienenkopfes oder Schienenfußes anlegenden Anschlagfläche angeordnet ist, sowie einen gebogenen, rohrförmigen Führungskanal für ein Fensterheberseil auf, der an seiner von der Führungsschiene weggerichteten Öffnung eine Bowden-Abstützung enthält.

Zur einfachen Herstellung und präzisen Ausbildung des Dreh- und Lagerzapfens und der Rast- und Verriegelungselemente ist das Seilumlenkstück einteilig als Spritzgussteil ausgebildet.

Alternativ können der Basiskörper und die Rast- und Verriegelungselemente aus einem einteiligen Spritzgussteil bestehen, in das der Dreh- und Lagerzapfen als separates Metallteil, vorzugsweise aus Stahl, eingesetzt, insbesondere eingespritzt ist.

Anhand eines in der Zeichnung dargestellten Ausführungsbeispieles sollen der der Erfindung zugrundeliegende Gedanke und verschiedene Varianten der erfindungsgemäßen Lösung angegeben und erläutert werden. Es zeigen:
- Fig. 1: eine schematische isometrische Darstellung eines Schienenkopfes und eines Seilumlenkstücks vor der Montage des Seilumlenkstücks am Schienenkopf;
- Fig. 2 bis 4: isometrische Ansichten auf die Vorder- und Rückseite des Seilumlenkstücks;
- Fig. 5 und 6: schematische Darstellungen eines Seilumlenkstücks und eines Schienenfußes einer Führungsschiene in einer Montage-Ausgangsstellung und einer Montage-Endstellung bzw. Betriebsstellung des Seilumlenkstücks;
- Fig. 7 bis 10: isometrische Darstellungen der Vorder- und Rückseite des Schienenkopfes einer Führungsschiene mit auf den Schienenkopf in gekippter Stellung aufgestecktem Seilumlenkstück in der MontageAusgangsstellung und die Befestigung des Seilumlenkstücks am Schienenkopf in der Montage-Endstellung;
- Fig. 11: eine schematische isometrische Darstellung des mit dem Schienenkopf einer Führungsschiene verbundenen Seilumlenkstücks in der MontageEndstellung und
- Fig. 12: eine vergrößerte isometrische Darstellung eines Teils des mit dem Schienenkopf verbundenen Seilumlenkstücks;

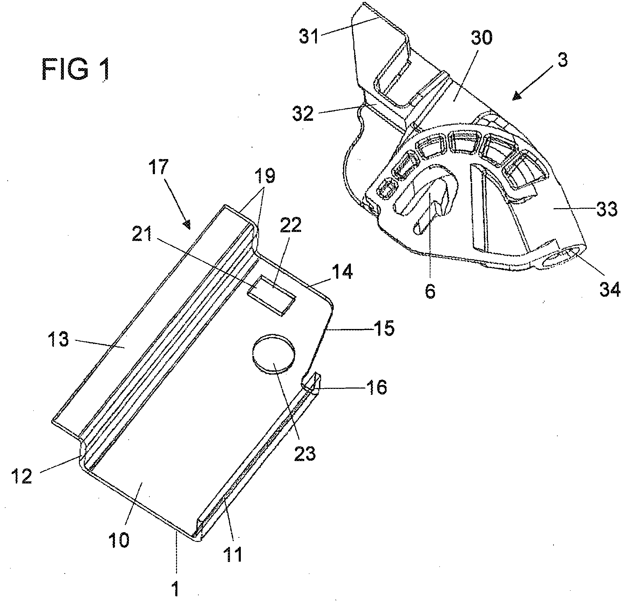

In den Fig. 1 bis 12 ist das obere, als Schienenkopf 17 bzw. das untere, als Schienenfuß 18 bezeichnete Ende einer Führungsschiene 1 eines im Übrigen nicht dargestellten ein- oder doppelsträngigen Seil-Fensterhebers innerhalb einer Kraftfahrzeugtür dargestellt. Auf der Führungsschiene 1 ist ein ebenfalls nicht dargestellter Mitnehmer in Längsrichtung der Führungsschiene beweglich angeordnet, der mit einer Fensterscheibe verbunden ist, die entsprechend der Bewegungsrichtung des Mitnehmers angehoben und abgesenkt wird. Zu diesem Zweck ist der Mitnehmer mit einem Fensterheberseil verbunden, das in einer geschlossenen Schleife geführt ist und von einem manuellen oder motorischen Fensterheberantrieb zu einem in den Fig. 1 bis 12 dargestellten Seilumlenkstück 3 am Schienenkopf 17, entlang der Führungsschiene 1 zu einem entsprechenden Seilumlenkstück am Schienenfuß 18 zurück zum Fensterheberantrieb geführt ist. Zwischen den beiden Seilumlenkstücken 3 am Schienenkopf 17 und Schienenfuß 18 ist das Fensterheberseil mit dem Mitnehmer beispielsweise über einen in einer Nippelkammer des Mitnehmers abgestützten Seilnippel verbunden.

Zwischen den Seilumlenkstücken 3 und dem Fensterheberantrieb kann das Fensterheberseil in einer Bowdenzug-Hülle geführt sein, die an einer Bowden-Abstützung 34 gemäß den Fig. 1 bis 4 abgestützt wird.

Wie der isometrischen Darstellung der Fig. 1 zu entnehmen ist, weist die Führungsschiene 1 ein ZU-Profil auf, das aus einem U-Profil mit einem Mittelschenkel 10, von dessen Enden rechtwinklig Seitenschenkel 11, 12 abstehen, und einem von dem einen Seitenschenkel 12 rechtwinklig nach außen abstehenden Randschenkel 13 besteht.

Zur Befestigung des Seilumlenkstücks 3 weist der Schienenkopf 17 bzw. Schienenfuß 18 gemäß den Fig. 1 und 5 bis 12 im Mittelschenkel 10 eine vorzugsweise rechteckige Aussparung 21 und eine durchgehende Dreh- und Lageröffnung 23 auf. Von der Endkante 14 des Mittelschenkels 10 zu dem nicht mit dem Randschenkel 13 verbundenen Seitenschenkel 11 verläuft eine Abschrägung 15, an deren seitenschenkel-seitigem Ende ein Rastanschlag 16 vorgesehen ist.

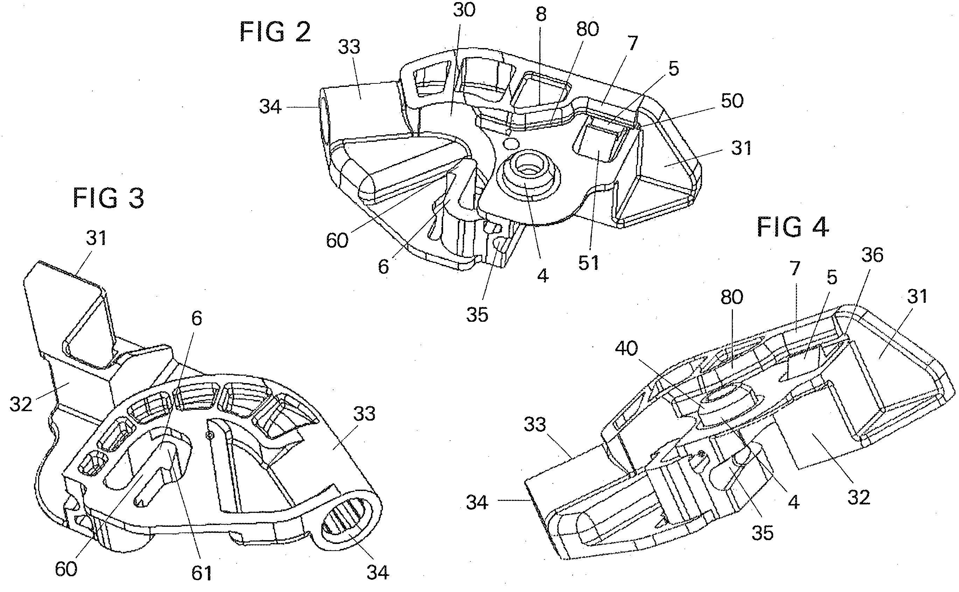

Das Seilumlenkstück 3 besteht aus einem Basiskörper 30, der nach der Verbindung des Seilumlenkstücks 3 mit dem Schienenkopf 17 bzw. Schienenfuß 18 in der Montage-Endstellung bzw. Betriebsstellung auf der Innenseite des ZU-Profils der Führungsschiene 1 im Bereich des U-Profils zwischen den Seitenschenkeln 11, 12 angeordnet ist. Wie insbesondere den isometrischen Darstellungen der Fig. 2 bis 4 zu entnehmen ist, steht vom Basiskörper 30 ein Dreh- und Lagerzapfen 4 ab, der an seinem vom Basiskörper 30 abgewandten Ende eine umlaufende Abschrägung 40 aufweist.

Der Dreh- und Lagerzapfen 4 wird - wie nachstehend näher ausgeführt wird - in der Montage-Ausgangsstellung in einer gegenüber der Montage-Endstellung oder Betriebsstellung des Seilumlenkstücks 3 in die Dreh- und Lageröffnung 23 am Schienenkopf 17 bzw. Schienenfuß 18 eingesteckt, so dass der Basiskörper 30 zur Anlage an die Innenseite des Schienenkopfes 17 bzw. Schienenfußes 18 kommt.

Der Basiskörper 30 enthält einen gebogenen, rohrförmigen Seilkanal 33, der an seinem einen Ende eine Bowden-Abstützung 34 aufweist und an seinem anderen Ende in einen Gleitkanal 35 für das Fensterheberseil übergeht. In der Montage-Endstellung oder Betriebsstellung des Seilumlenkstücks 3 ist der Gleitkanal 35 auf die Längserstreckung der Führungsschiene 1 ausgerichtet, während die am entgegengesetzten Ende des Seilkanals 33 vorgesehene Öffnung mit der Bowden-Abstützung 34 zum Fensterheberantrieb weist.

In der Montage-Endstellung oder Betriebsstellung liegt eine am Basiskörper 30 ausgebildete Anschlagfläche 31 an den Endkanten 19 des Seitenschenkels 12 und Randschenkels 13 des Schienenkopfes 17 bzw. Schienenfußes 18 als Endanschlag an. Benachbart zur Anschlagfläche 31 ist abgestuft ein Anschlag 32 für den auf der Führungsschiene 1 längsverschieblich geführten Mitnehmer ausgebildet.

In den Basiskörper 30 des Seilumlenkstücks 3 sind mehrere Rast- und Verriegelungselemente integriert, die in unterschiedlicher Funktion zur Verdrehsicherung oder zur Sicherung der Anlage des Seilumlenkstücks 3 in Y-Richtung am Schienenkopf 17 oder Schienenfuß 18 dienen. Zur Verdrehsicherung ist gemäß den Fig. 2 bis 4 ein in den Basiskörper 30 integriertes Rastelement vorgesehen, das als Rastnase 5 mit einer Einführschräge 50 und einer Rastkante 51 ausgebildet ist und in der Montage-Endstellung in die Aussparung 21 am Schienenkopf 17 bzw. Schienenfuß 18 einrastet, so dass die Rastkante 51 der Rastnase 5 an einer Rastkante 22 der Aussparung 21 anliegt und damit ein Zurückdrehen des Seilumlenkstücks 3 aus der Montage-Endstellung oder Betriebsstellung in die Montage-Ausgangsstellung verhindert.

In gleicher Weise wirkt ein zweites Rastelement, das als Rasthaken 6 ausgebildet ist und einen elastischen Steg 60 und einen Rastkopf mit einer Rastkante 61 aufweist, die in der Montage-Endstellung an dem Rasanschlag 16 an der Endkante des Seitenschenkels 11 anliegt und ebenfalls ein Zurückdrehen des Seilumlenkstücks 3 aus der Montage-Endstellung in die Montage-Ausgangsstellung verhindert.

Zur Sicherung der Anlage des Basiskörpers 30 an der Innenseite des Schienenkopfes 17 bzw. Schienenfußes 18 und damit zur Sicherung des Seilumlenkstücks 3 in Richtung senkrecht zur Fläche der Führungsschiene, d.h. zur Sicherung des Seilumlenkstücks 3 in Y-Richtung des Kraftfahrzeugs bei in eine Kraftfahrzeugtür eingesetztem Seilfensterheber ist benachbart zur Rastnase 5 ein erster, leistenförmiger Hintergriff 7 vorgesehen, der die Endkante 14 des Mittelschenkels 10 des Schienenkopfes 17 bzw. Schienenfußes 18 umgreift und sich an den der Endkante 14 benachbarten Abschnitt der Außenseite des Schienenkopfes 17 bzw. Schienenfußes 18 anlegt. Zur Aufnahme der Endkante 14 und der an die Endkante 14 anschließenden Flächenabschnitte ist auf der Innenseite und Außenseite des Schienenkopfes 17 bzw. Schienenfußes 18 gemäß Fig. 4 ein Einführschlitz 36 vorgesehen.

Benachbart zum ersten, leistenförmigen Hintergriff 7 ist ein zweiter Hintergriff 8 vorgesehen, der die Abschrägung 15 zwischen der Endkante 14 des Mittelschenkels 10 und dem Rastanschlag 16 des Seitenschenkels 11 umgreift und sich ebenfalls an die Außenseite des Schienenkopfes 17 bzw. Schienenfußes 18 anlegt. Der zweite Hintergriff 8 weist eine schräge Kante 80 auf, die in der Montage-Ausgangsstellung der Abschrägung 15 gegenübersteht und damit das Einführen des Dreh- und Lagerzapfens 4 in die Dreh- und Lageröffnung 23 ermöglicht.

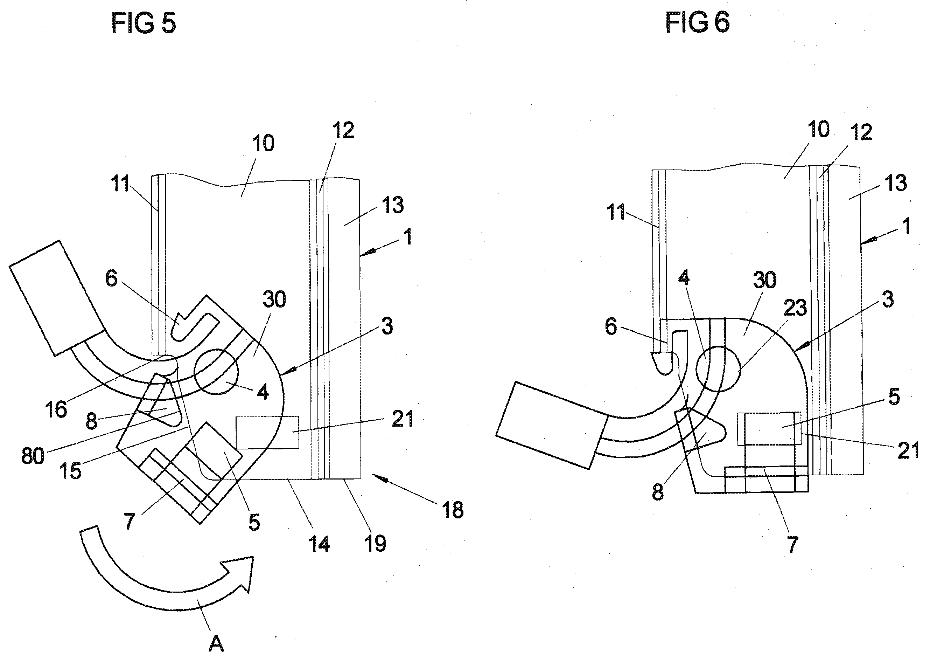

Die Fig. 5 und 6 zeigen in schematischer Draufsicht die vorstehend anhand der Fig. 1 bis 4 beschriebenen Montage-, Rast- und Verriegelungselemente des Seilumlenkstücks 3 und des Schienenkopfs 17 bzw. Schienenfußes 18 der Führungsschiene 1 zum Ausrichten und Befestigen des Seilumlenkstücks 3 am Schienenfuß 18 der Führungsschiene 1 sowie die Montageschritte ausgehend von einer in Fig. 5 dargestellten Montage-Ausgangsstellung in eine in Fig. 6 dargestellte Montage-Endstellung oder Betriebsstellung des Seilumlenkstücks 3 in Bezug auf die Führungsschiene 1.

Fig. 5 zeigt schematisch das Seilumlenkstück 3 in der Montage-Ausgangsstellung, in der es gegenüber der Längserstreckung der Führungsschiene 1 gekippt ist, so dass die schräge Kante 80 des zweiten Hintergriffs 8 in etwa parallel zur Abschrägung 15 am Schienenfuß 18 ausgerichtet ist und der der Y-Sicherung dienende leistenförmige erste Hintergriff 7 dem Übergang der Endkante 14 des Mittelschenkels 10 zur Abschrägung 15 und der Rastkopf des Rasthakens 6 der Innenseite des Seitenschenkels 11 gegenüber steht. In dieser gekippten Stellung des Seilumlenkstücks 3 wird der Dreh- und Lagerzapfen 4 in die Dreh- und Lageröffnung 23 des Schienenfußes 18 eingesteckt, wobei die umlaufende Abschrägung des Dreh- und Lagerzapfens 4 das Einstecken in die Dreh- und Lageröffnung 23 ermöglicht.

Nach dem Einstecken des Dreh- und Lagerzapfens 4 in die Dreh- und Lageröffnung 23 bis zur Anlage des Basiskörpers 30 an der Innenseite des Schienefußes 18 wird das Seilumlenkstück 3 in Richtung des Pfeiles A um die durch den Dreh- und Lagerzapfen 4 und die Dreh- und Lageröffnung 23 gebildete Montage-Drehachse geschwenkt, wobei der Rastkopf des Rasthakens 6 an der Innenseite des Seitenschenkels 11 und der zweite Hintergriff 8 mit seiner Innenfläche an der Außenseite des Mittelschenkels 10 und die Rastnase 5 an der Innenseite des Mittelschenkels 10 entlanggleitet. Der zwischen dem leistenförmigen ersten Hintergriff 7 und dem Basiskörper 30 ausgebildete Einführschlitz 36 schiebt sich dabei über die Endkante 14 des Mittelschenkels 10.

Die Drehung des Seilumlenkstücks 3 wird fortgesetzt, bis die Anschlagfläche 31 an die Endkante 19 des Seitenschenkels 12 und Randschenkels 13 anschlägt, die Rastnase 5 in die Aussparung 21 des Schienenfußes 18 einrastet und die Rastkante 61 am Rastkopf des Rasthakens 6 mit dem Rastanschlag 16 am Ende des Seitenschenkels 11 in Eingriff kommt. In dieser in Fig. 6 dargestellten Montage-Endstellung bzw. Betriebsstellung des Seilumlenkstücks 3 liegt der zweite Hintergriff 8 mit seiner Innenfläche an der Außenseite des Mittelschenkels 10 und der leistenförmige erste Hintergriff 7 zur Y-Sicherung des Seilumlenkstücks 3 an dem der Endkante 14 des Mittelschenkels 10 benachbarten Abschnitt der Außenseite des Schienenfußes 18 an, während der Einführschlitz 36 die Endkante 14 des Mittelschenkels 10 umgreift. Damit ist das Seilumlenkstück 3 sowohl gegen ein Abziehen des Basiskörpers 30 von der Innenseite des Schienenfußes 18 und gegen ein Verkippen in Y-Richtung als auch gegenüber einem Verdrehen des Seilumlenkstücks 3 durch den Eingriff der Rastnase 5 in die Aussparung 21 und Anlage der Rastkante 51 der Rastnase 5 an der Rastkante 22 der Aussparung 21 sowie der Rastkante 61 des Rasthakens 6 am Rastanschlag 16 des Seitenschenkels 11 gesichert.

Nachdem der Dreh- und Lagerzapfens 4 in gekippter Stellung des Seilumlenkstücks 3 in die Dreh- und Lageröffnung 23 am Schienenfuß 18 eingesteckt wurde, führt somit eine reine Schwenkbewegung des Seilumlenkstücks 3 um die durch den Dreh- und Lagerzapfen 4 sowie die Dreh- und Lageröffnung 23 gebildete Montage-Drehachse zu einer Verriegelung des Seilumlenkstücks 3 in der Montage-Endstellung mit einer Verdrehsicherung und Sicherung in X-, Y- und Z-Richtung bzw. Sicherung gegenüber einem Kippen bzw. Abziehen des Basiskörpers 30 von der Innenseite des Schienenfußes 18, so dass die im Betrieb des Seilfensterhebers auf das Seilumlenkstück 3 einwirkenden Seilkräfte dauerhaft ohne Lageänderung des Seilumlenkstücks 3 in Bezug auf den Schienenfuß 18 der Führungsschiene 1 aufgenommen werden.

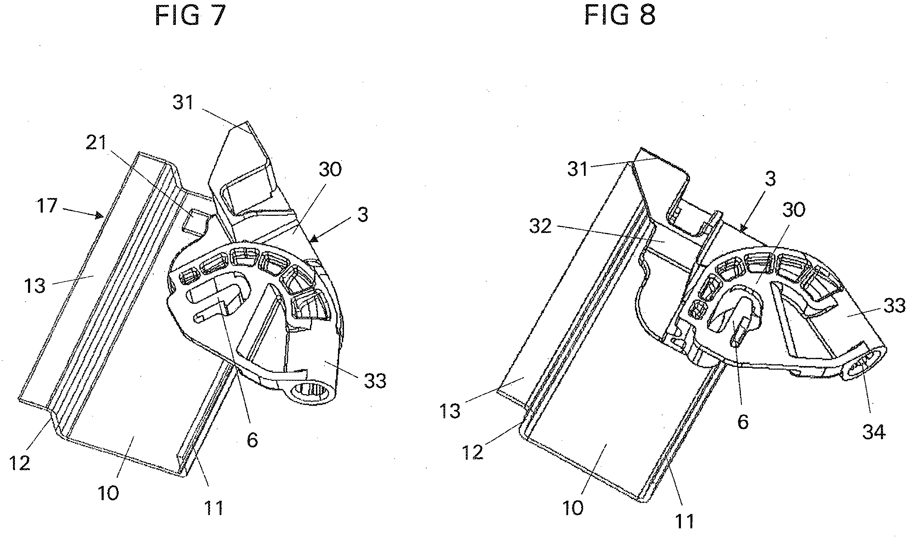

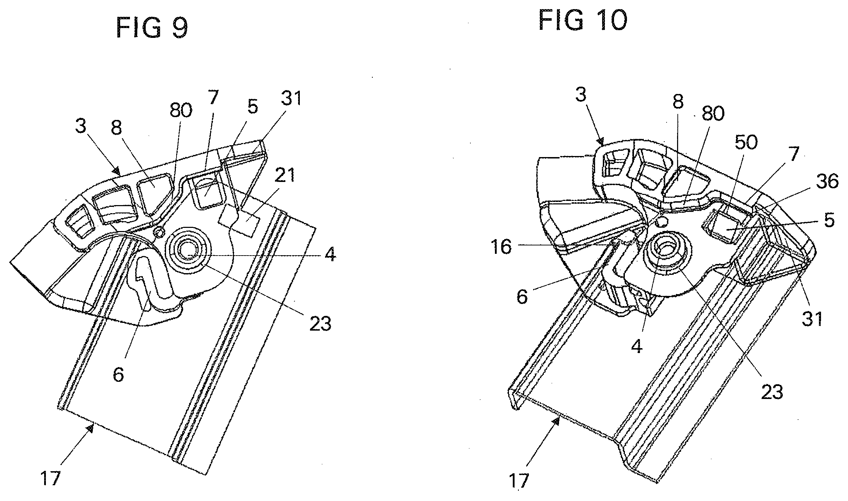

In den Fig. 7 und 8 sind in isometrischen Ansichten auf die Innenseite des Schienenkopfes 17 und in den Fig. 9 und 10 - mit schematisch durchscheinender Darstellung des Schienenkopfes 17 - in isometrischen Ansichten auf die Außenseite des Schienenkopfes 17 die Anbringung des Seilumlenkstücks 3 am Schienenkopf 17 in der Montage-Ausgangsstellung (Fig. 7 und 9) sowie in der Montage-Endstellung bzw. Betriebsstellung (Fig. 8 und 10) dargestellt.

Die Fig. 7 und 9 zeigen in isometrischer Ansicht auf die Innenseite und Außenseite des Schienenkopfes 17 der Führungsschiene 1 die Montage-Ausgangsstellung, in der das Seilumlenkstück 3 in gegenüber der Montage-Endstellung gekippter Lage an den Schienenkopf 17 angesetzt und der Dreh- und Lagerzapfen 4 in die Dreh- und Lageröffnung 23 eingesteckt wird, wobei die Schrägfläche 80 des zweiten Hintergriffs 8 in etwa parallel zur Abschrägung 15 der Endkante des Schienenkopfes 17 ausgerichtet ist und der Rasthaken 6 der Innenseite des Seitenschenkels 11 gegenübersteht.

Durch Schwenken des Seilumlenkstücks 3 um die durch den Dreh- und Lagerzapfen 4 und die Dreh- und Lageröffnung 23 gebildete Montage-Drehachse werden der Rasthaken 6 entlang der Innenseite des Seitenschenkels 11 und die Rastnase 5 im Kreisbogen zur Aussparung 21 geführt. Kurz vor dem Erreichen der Montage-Endstellung schiebt sich der Einführschlitz 36 über die Endkante 14 des Mittelschenkels 10 bis in der in den Fig. 8 und 10 dargestellten Montage-Endstellung die Anschlagfläche 31 zur Anlage an der Endkante 19 des Seitenschenkels 12 und Randschenkels 13 kommt, die Rastnase 4 in die Aussparung 31 einrastet und die Rastkante 51 der Rastnase 5 an der Rastkante 22 der Rastöffnung 21 anliegt. Gleichzeitig greift die Rastkante 61 des Rasthakens 6 über den Rastanschlag 16 am Ende des Seitenschenkels 11 und sichert zusammen mit der Rastnase 5 das Seilumlenkstück 3 gegenüber einem Verdrehen um die Montage-Drehachse.

Dabei kommt der leistenförmige, erste Hintergriff 7 zur Anlage an dem der Endkante 14 des Mittelschenkels 10 benachbarten Abschnitt der Außenseite des Schienenkopfes 17 und sichert im Zusammenwirken mit dem zweiten Hintergriff 8 das Seilumlenkstück in Y-Richtung sowie die Anlage des Basiskörpers 30 des Seilumlenkstücks 3 an der Innenseite des Schienenkopfes 17, die durch das U-Profil des Mittelschenkels 10 und den beiden Seitenschenkeln 11, 12 gebildet wird.

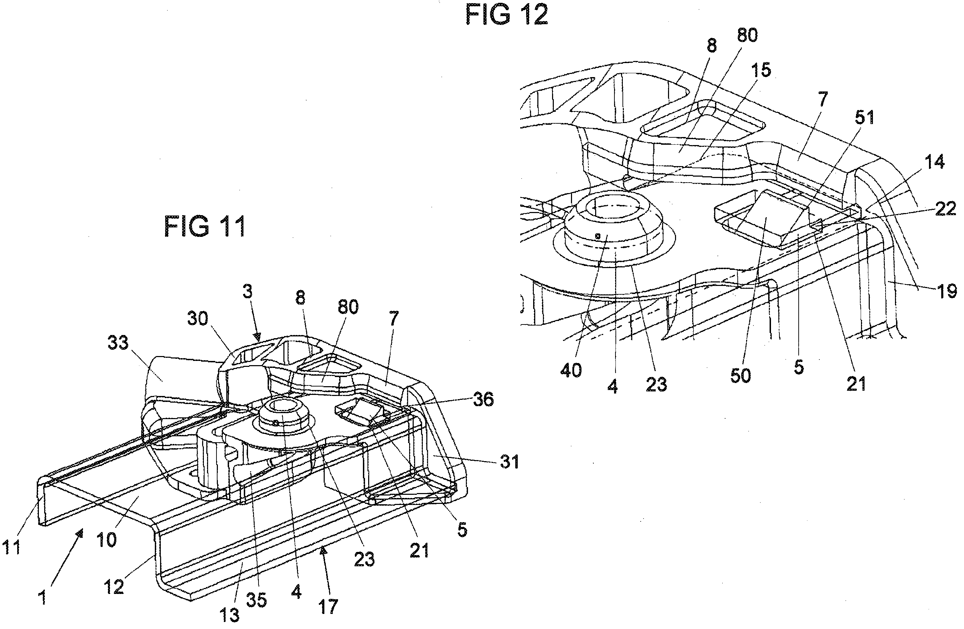

Fig. 11 zeigt die Montage-Endstellung oder Betriebsstellung des Seilumlenkstücks 3 und Fig. 12 einen vergrößerten Ausschnitt der Darstellung gemäß Fig. 11 mit jeweils einer Durchsichts-Darstellung des Schienenkopfes 17 der Führungsschiene.

In der Montage-Endstellung ist der Gleitkanal 35 des Seilumlenkstücks 3 in Längsrichtung der Führungsschiene 1 ausgerichtet, während der Seilkanal 33 schräg von dem Schienenkopf 17 weggerichtet ist. Die Anschlagfläche 31 des Seilumlenkstücks 3 liegt an den Endkanten 19 des Seitenschenkels 12 und des Randschenkel 13 an. Der Dreh- und Lagerzapfen 4 mit seiner Abschrägung 40 ragt durch die Dreh- und Lageröffnung 23 und die der Verdrehsicherung dienende Rastnase 5 ist in die Aussparung 21 eingerastet und liegt mit ihrer Rastkante 51 an der Rastkante 22 der Aussparung 21 an. Der erste, leistenförmige Hintergriff 7 umgreift die Endkante 14 des Mittelschenkels 10 und liegt an den Abschnitten der Außen- und Innenseite des Mittelschenkels 10 des Schienenkopfes 17 an, die an die Endkante 14 angrenzen, wobei der Einführschlitz 36 am Seilumlenkstück 3 die Endkante 14 aufnimmt.

Fig. 12 zeigt gestrichelt die vom zweiten Hintergriff 8 übergriffene Abschrägung 15 des Schienenkopfes 17 sowie die schräge Kante 80 des zweiten Hintergriffs 8, die diesen Bereich des Schienenkopfes 17 diagonal übergreift.

### Bezugszeichenliste

- 1: Führungsschiene
- 3: Seilumlenkstück
- 4: Dreh- und Lagerzapfen
- 5: Rastnase
- 6: Rasthaken
- 7: erster Hintergriff
- 8: zweiter Hintergriff
- 10: Mittelschenkel
- 11, 12: Seitenschenkel
- 13: Randschenkel
- 14: Endkante
- 15: Abschrägung
- 16: Rastanschlag
- 17: Schienenkopf
- 18: Schienenfuß
- 19: Endkanten
- 21: Aussparung
- 22: Rastkante
- 23: Dreh- und Lageröffnung
- 30: Basiskörper
- 31: Anschlagfläche
- 32: Anschlag
- 33: Seilkanal
- 34: Bowden-Abstützung
- 35: Gleitkanal
- 36: Einführschlitz
- 40: Abschrägung
- 50: Einführschräge
- 51: Rastkante
- 60: elastischer Steg
- 61: Rastkante
- 80: schräge Kante

## Patentansprüche

1. Seilumlenkstück (3) für einen Seilfensterheber, der mindestens eine Führungsschiene (1) aufweist, an deren Schienenkopf (17) oder Schienenfuß (18) das Seilumlenkstück (3) zu befestigen ist, mit
- einem Basiskörper (30) des Seilumlenkstücks (3), der bei der Montage und nach der Befestigung des Seilumlenkstücks (3) am Schienenkopf (17) oder Schienenfuß (18) der Führungsschiene (1) an einer Seite des Schienenkopfes (17) oder Schienenfußes (18) anliegt,
- einem vom Basiskörper (30) abstehenden Dreh- und Lagerzapfen (4), der in gegenüber der Längserstreckung der Führungsschiene (1) gekippter Stellung des Seilumlenkstücks (3) in eine Dreh- und Lageröffnung (23) des Schienenkopfes (17) oder Schienenfußes (18) einsteckbar ist, wobei der Dreh- und Lagerzapfen (4) und die Dreh- und Lageröffnung (23) eine Montage-Drehachse ausbilden, um die das Seilumlenkstück (3) bei der Montage des Seilumlenkstücks (3) am Schienenkopf (17) oder Schienenfuß (18) der Führungsschiene (1) schwenkbar ist,
- einer Verdrehsicherung (5, 6; 21, 22, 16), die in einer Montage-Endstellung nach einem Schwenken des Seilumlenkstücks (3) um die Montage-Drehachse die Verbindung des Seilumlenkstücks (3) mit dem Schienenkopf (17) oder Schienenfuß (18) gegen ein Verdrehen des Seilumlenkstücks (3) um die Montage-Drehachse sichert, und
- einer am Basiskörper (30) ausgebildeten Einrichtung (7, 8) zur Sicherung der Anlage des Basiskörpers (30) am Schienenkopf (17) oder Schienenfuß (18) senkrecht zur Längserstreckung der Führungsschiene (1),
**dadurch gekennzeichnet,**
**dass** in der Montage-Endstellung eine am Basiskörper (30) des Seilumlenkstücks (3) ausgebildete Anschlagfläche (31) an einen Teil der Endkante (19) des Schienenkopfes (17) oder Schienenfußes (18) anliegt, und dass die Einrichtung zur Sicherung der Anlage des Basiskörpers (30) am Schienenkopf (17) oder Schienenfuß (18) aus mindestens einem eine Endkante (14, 15) des Schienenkopfes (17) oder Schienenfußes (18) zumindest teilweise umgreifenden, vom Basiskörper (30) ausgehenden Hintergriff (7, 8) besteht.

2. Seilumlenkstück nach Anspruch 1, **dadurch gekennzeichnet, dass** die Verdrehsicherung (5, 6; 21, 22, 16) mindestens ein in den Basiskörper (30) integriertes Rastelement (5, 6) aufweist, das nach dem Schwenken des Seilumlenkstücks (3) um die Montage-Drehachse in die Montage-Endstellung in eine Rastaufnahme (21, 16) am Schienenkopf (17) oder Schienenfuß (18) einrastet oder an die Rastaufnahme (21, 16) anschlägt.

3. Seilumlenkstück nach Anspruch 2, **dadurch gekennzeichnet, dass** ein erstes Rastelement aus einer vom Basiskörper (30) abstehenden Rastnase (5) mit einer Einführschräge (50) und einer Rastkante (51) besteht, die in der Montage-Endstellung des Seilumlenkstücks (3) an einer Rastkante (22) einer als Rastaufnahme ausgebildeten Aussparung (21) im Schienenkopf (17) oder Schienenfuß (18) der Führungsschiene (1) anliegt.

4. Seilumlenkstück nach Anspruch 2 oder 3, **dadurch gekennzeichnet, dass** ein zweites Rastelement aus einem vom Basiskörper (30) abstehenden, elastisch biegbaren Rasthaken (6) besteht, der bei der Befestigung des Seilumlenkstücks (3) am Schienenkopf (17) oder Schienenfuß (18) der Führungsschiene (1) durch Schwenken des Seilumlenkstücks (3) um die Montage-Drehachse zumindest über eine Teilstrecke an einem ersten Seitenschenkel (11) der Führungsschiene (1) elastisch nachgebend entlang gleitet und in der Montage-Endstellung an einem Rastanschlag (16) am Schienenkopf (17) oder Schienenfuß (18) der Führungsschiene (1) einrastet bzw. anschlägt.

5. Seilumlenkstück nach Anspruch 1, **dadurch gekennzeichnet, dass** der Hintergriff (7, 8) nach dem Einstecken des Dreh- und Lagerzapfens (4) in die Dreh- und Lageröffnung (23) in gegenüber der Längserstreckung der Führungsschiene (1) gekippter Stellung des Seilumlenkstücks (3) und vor dem Schwenken des Seilumlenkstücks (3) um die Montage-Drehachse von der Endkante (14, 15) des Schienenkopfes (17) oder Schienenfußes (18) beabstandet ist und in der Montage-Endstellung die Endkante (14, 15) umgreift.

6. Seilumlenkstück nach Anspruch 5, **dadurch gekennzeichnet, dass** ein erster Hintergriff (7) die Endkante (14) eines Mittelschenkels (10) der Führungsschiene (1) umgreift und in der Montage-Endstellung mit einem parallel zur Endkante (14) des Mittelschenkels (10) verlaufenden Abschnitt an der dem Basiskörper (30) entgegen gesetzten Seite des Schienenkopfes (17) oder Schienenfußes (18) der Führungsschiene (1) anliegt und dass zwischen dem ersten Hintergriff (7) und dem Basiskörper (30) ein Einführschlitz (36) zum Einführen der Endkante (14) des Mittelschenkels (10) der Führungsschiene (1) vorgesehen ist.

7. Seilumlenkstück nach mindestens einem der vorangehenden Ansprüche 1, 5 oder 6, **dadurch gekennzeichnet, dass** ein zweiter Hintergriff (8) an einem vom Basiskörper (30) abstehenden Schenkel ausgebildet ist, der in der Montage-Endstellung eine von der Endkante des Mittelschenkels (10) zum Rastanschlag (16) des ersten Seitenschenkels (11) unter einem stumpfen Winkel zur Endkante (14) des Mittelschenkels (10) verlaufende Abschrägung (15) umgreift und in der Montage-Endstellung mit einem flächigen Abschnitt an der dem Basiskörper (30) entgegen gesetzten Seite des Schienenkopfes (17) oder Schienenfußes (18) der Führungsschiene (1) anliegt.

8. Seilumlenkstück nach Anspruch 7, **dadurch gekennzeichnet, dass** der zweite Hintergriff (8) eine dem stumpfen Winkel der Abschrägung (15) entsprechende schräge Kante (81) aufweist, derart, dass beim Einstecken des Dreh- und Lagerzapfens (4) des Seilumlenkstücks (3) in die Dreh- und Lageröffnung (23) am Schienenkopf (17) oder Schienenfuß (18) der Führungsschiene (1) die schräge Kante (81) im Wesentlichen parallel zur Abschrägung (15) verläuft.

9. Seilumlenkstück nach mindestens einem der vorangegangenem Ansprüche **dadurch gekennzeichnet, dass** der Dreh- und Lagerzapfen (4) eine endseitig umlaufende Einführschräge (40) aufweist.

10. Seilumlenkstück nach mindestens einem der vorangehenden Ansprüche **dadurch gekennzeichnet, dass** der Basiskörper (30) einen Mitnehmeranschlag (32) für einen entlang der Führungsschiene (1) verstellbaren Mitnehmer des Seilfensterhebers aufweist, der benachbart zu der am Basiskörper (30) ausgebildeten, sich in der Montage-Endstellung an einen Teil der Endkanten (19) des Schienenkopfes (17) oder Schienenfußes (18) anlegenden Anschlagfläche (31) angeordnet ist.

11. Seilumlenkstück nach mindestens einem der vorangehenden Ansprüche, **dadurch gekennzeichnet, dass** im Basiskörper (30) ein gebogener, rohrförmiger Seilkanal (33) für ein Fensterheberseil angeordnet ist, der an seiner von der Führungsschiene (1) weggerichteten Öffnung eine Bowden-Abstützung (34) aufweist.

12. Seilumlenkstück nach mindestens einem der vorangehenden Ansprüche, **dadurch gekennzeichnet, dass** das Seilumlenkstück (3) einteilig als Spritzgussteil ausgebildet ist.

13. Seilumlenkstück nach mindestens einem der vorangehenden Ansprüche 1 bis 11, **dadurch gekennzeichnet, dass** der Basiskörper (30) und die Rast- und Verriegelungselemente (5, 6, 7, 8) des Seilumlenkstücks (3) aus einem einteiligen Spritzgussteil bestehen, in das der Dreh- und Lagerzapfen (4) als separates Metallteil, vorzugsweise aus Stahl, eingespritzt ist.

## Claims

1. Cable deflecting piece (3) for a cable operated window lifter, which comprises at least one guide rail (1) wherein the cable deflecting piece (3) is to be fastened on the rail head (17) or rail foot (18) thereof, with
- a base body (30) of the cable deflecting piece (3), which butts against the rail head (17) or rail foot (18) during mounting and after fastening the cable deflecting piece (3) on the rail head (17) or rail foot (18) of the guide rail (1),
- a rotary and bearing pin (4) projecting from the base body (30), which can be inserted into a rotary and bearing opening (23) of the rail head (17) or rail foot (18) in a position of the cable deflecting piece (3) tilted in relation to the longitudinal extension of the guide rail (1) wherein the rotary and bearing pin (4) and the rotary and bearing opening (23) form a mounting rotation axis about which the cable deflecting piece (3) can be pivoted during the mounting of the cable deflecting piece (3) on the rail head (17) or rail foot (18) of a guide rail (1),
- a rotation prevention means (5, 6; 21, 22, 16) which secures the connection of the cable deflecting piece (3) to the rail head (17) or rail foot (18) against a rotation of the cable deflecting piece (3) about the mounting rotation axis in a final mounting position after a tilting of the cable deflecting piece (3) about the mounting rotation axis, and
- a device (7, 8) formed on the base body (30) for securing the abutment of the base body (30) against the rail head (17) or rail foot (18) perpendicular to the longitudinal extension of the guide rail (1).
**characterized in that**
in the final mounting position a stop area (31) formed on the base body (30) of the cable deflecting piece (3) abuts against a part of the terminal edge (19) of the rail head (17) or rail foot (18), and the device for securing the abutment of the base body (30) against the rail head (17) or rail foot (18) consists of at least one rear grip (7, 8) originating from the base body (30) and encompassing at least partially a terminal edge (14, 15) of the rail head (17) or rail foot (18).

2. Cable deflecting piece according to claim 1, **characterized in that** the rotation prevention means (5, 6; 21, 22, 16) comprises at least one latching element (5, 6) integrated into the base body (30), which snaps after pivoting the cable deflecting piece (3) about the mounting rotation axis in the final mounting position into a latching receptacle (21, 16) on the rail head (17) or rail foot (18) or strikes the latching receptacle (21, 16).

3. Cable deflecting piece according to claim 2, **characterized in that** a first latching element consists of a latching nose (5) projecting from the base body (30) with a lead-in-chamfer (50) and a latching edge (51), which abuts in the final mounting position of the cable deflecting piece (3) against a latching edge (22) of a recess (21) formed as a latching receptacle in the rail head (17) or rail foot (18) of the guide rail (1).

4. Cable deflecting piece according to claim 2 or 3, **characterized in that** a second latching element consists of an elastically bendable latching nose (6) projecting from the base body (30) which when mounting the cable deflecting piece (3) on the rail head (17) or rail foot (18) of the guide rail (1) by pivoting the cable deflecting piece (3) about the mounting rotation axis slides at least along a section on a first side arm (11) of the guide rail (1) in an elastically relenting manner and snaps or strikes in the final mounting position on a latching stop (16) on the rail head (17) or rail foot (18) of the guide rail (1).

5. Cable deflecting piece according to claim 1, **characterized in that** the rear grip (7, 8) is spaced after inserting the rotary and bearing pin (4) into the rotary and bearing opening (23) in position of the cable deflecting piece (3) tilted in relation to the longitudinal extension of the guide rail (1) and before pivoting the cable deflecting piece (3) about the mounting rotation axis from the terminal edge (14, 15) of the rail head (17) or rail foot (18) and encompasses in the final mounting position the terminal edge (14, 15).

6. Cable deflecting piece according to claim 5, **characterized in that** a first rear grip (7) encompasses the terminal edge (14) of a central arm (10) of the guide rail (1) and abuts in the final mounting position with a section continuing parallel to the terminal edge (14) of the central arm (10) against the side of the rail head (17) or rail foot (18) of the guide rail (1) opposing the base body (30) and an insertion slot (36) for inserting the terminal edge (14) of the central arm (10) of the guide rail (1) is provided between the first rear grip (7) and the base body (30).

7. Cable deflecting piece according to at least one of the preceding claims 1, 5 or 6, **characterized in that** a second rear grip (8) is formed on an arm projecting from the base body (30), which encompasses in the final mounting position a chamfer (15) continuing from the terminal edge of the central arm (10) to the latching stop (16) of the first side arm (11) at an obtuse angle to the terminal edge (14) of the central arm (10) and abuts in the final mounting position with a flat section against the side of the rail head (17) or rail foot (18) of the guide rail (1) opposing the base body (30).

8. Cable deflecting piece according to claim 7, **characterized in that** the second rear grip (8) comprises an inclined edge (81) corresponding to the obtuse angle of the chamfer (15) such that when inserting the rotary and bearing pin (4) of the cable deflecting piece (3) into the rotary and bearing opening (23) on the rail head (17) or rail foot (18) of the guide rail (1) the inclined edge (81) continues essentially parallel to the chamfer (15).

9. Cable deflecting piece according to at least one of the preceding claims, **characterized in that** the rotary and bearing pin (4) comprises on the terminal side a circumferential lead-in chamfer (40).

10. Cable deflecting piece according to at least one of the preceding claims, **characterized in that** the base body (30) comprises a carrier stop (32) for a carrier of the cable window lifter adjustable along the guide rail (1), which is arranged adjacent to the stop area (31) formed on the base body (30) and abutting in the final mounting position against a part of the terminal edges (19) of the rail head (17) or rail foot (18).

11. Cable deflecting piece according to at least one of the preceding claims, **characterized in that** a bended, tubular cable channel (33) for a window lifter cable is arranged in the base body (30), which comprises a Bowden support (34) on its opening directed away from the guide rail (1).

12. Cable deflecting piece according to at least one of the preceding claims, **characterized in that** the cable deflecting piece (3) is formed in one piece as injection moulding piece.

13. Cable deflecting piece according to at least one of the preceding claim 1 to 11, **characterized in that** the base body (30) and the latching and locking elements (5, 6, 7, 8) of the cable deflecting piece (3) consist of a singular injection moulding piece, into which the rotary and bearing pin (4) is injected as a separate metal part preferably made of steel.

## Revendications

1. Pièce de renvoi de câble (3) pour un lève-vitre à câble, qui comprend au moins un rail de guidage (1), au niveau du champignon de rail (17) ou du patin de rail (18) duquel la pièce de renvoi de câble (3) est à fixer, comprenant
- un corps de base (30) de la pièce de renvoi de câble (3), qui repose, lors du montage et après la fixation de la pièce de renvoi de câble (3) au niveau du champignon de rail (17) ou du patin de rail (18) du rail de guidage (1), au niveau d'un côté du champignon de rail (17) ou du patin de rail (18),
- un tourillon pivot et de support (4) dépassant du corps de base (30), lequel peut être enfiché dans une ouverture de rotation et de support (23) du champignon de rail (17) ou du patin de rail (18) dans une position, basculée par rapport à l'extension longitudinale du rail de guidage (1), de la pièce de renvoi de câble (3), le tourillon pivot et de support (4) et l'ouverture de rotation et de support (23) réalisant un axe de rotation de montage, autour duquel la pièce de renvoi de câble (3) peut être pivotée lors du montage de la pièce de renvoi de câble (3) au niveau du champignon de rail (17) ou du patin de rail (18) du rail de guidage (1),
- un système de blocage anti-torsion (5, 6 ; 21, 22, 16), qui bloque la liaison de la pièce de renvoi de câble (3) au champignon de rail (17) ou au patin de rail (18) contre toute torsion de la pièce de renvoi de câble (3) autour de l'axe de rotation de montage dans une position finale de montage, après un pivotement de la pièce de renvoi de câble (3) autour de l'axe de rotation de montage, et
- un système (7, 8) réalisé au niveau du corps de base (30) servant au blocage de l'appui du corps de base (30) au niveau du champignon de rail (17) ou du patin de rail (18) de manière perpendiculaire par rapport à l'extension longitudinale du rail de guidage (1),
**caractérisée en ce**
**qu'**une surface d'appui (31) réalisée au niveau du corps de base (30) de la pièce de renvoi de câble (3) repose au niveau d'une partie de l'arête d'extrémité (19) du champignon de rail (17) ou du patin de rail (18) dans la position finale de montage, et en ce que le système servant au blocage de l'appui du corps de base (30) au niveau du champignon de rail (17) ou du patin de rail (18) est constitué au moins d'un organe de prise par l'arrière (7, 8) entourant au moins en partie une arête d'extrémité (14, 15) du champignon de rail (17) ou du patin de rail (18), partant du corps de base (30).

2. Pièce de renvoi de câble selon la revendication 1, **caractérisée en ce que** le système de blocage anti-torsion (5, 6 ; 21, 22, 16) présente au moins un élément d'enclenchement (5, 6) intégré dans le corps de base (30), qui s'enclenche dans un logement d'enclenchement (21, 16) au niveau du champignon de rail (17) ou du patin de rail (18) ou qui vient buter contre le logement d'enclenchement (21, 16) après le pivotement de la pièce de renvoi de câble (3) autour de l'axe de rotation de montage dans la position finale de montage.

3. Pièce de renvoi de câble selon la revendication 2, **caractérisée en ce qu'**un premier élément d'enclenchement est constitué d'un ergot d'enclenchement (5) dépassant du corps de base (30) pourvu d'un chanfrein d'introduction (50) et d'une arête d'enclenchement (51), lequel ergot d'enclenchement repose, dans la position finale de montage de la pièce de renvoi de câble (3), au niveau d'une arête d'enclenchement (22) d'un évidement (21) réalisé sous la forme d'un logement d'enclenchement dans le champignon de rail (17) ou dans le patin de rail (18) du rail de guidage (1).

4. Pièce de renvoi de câble selon la revendication 2 ou 3, **caractérisée en ce qu'**un deuxième élément d'enclenchement est constitué d'un crochet d'enclenchement (6) dépassant du corps de base (30), pouvant être cintré élastiquement, lequel glisse en se déformant élastiquement au moins sur un trajet partiel le long d'une première branche latérale (11) du rail de guidage (1) lors de la fixation de la pièce de renvoi de câble (3) au niveau du champignon de rail (17) ou du patin de rail (18) du rail de guidage (1) par pivotement de la pièce de renvoi de câble (3) autour de l'axe de rotation de montage et qui s'enclenche ou vient buter dans la position finale de montage au niveau d'une butée d'enclenchement (16) au niveau du champignon de rail (17) ou du patin de rail (18) du rail de guidage (1).

5. Pièce de renvoi de câble selon la revendication 1, **caractérisée en ce que** l'organe de prise par l'arrière (7, 8) est tenu à distance de l'arête d'extrémité (14, 15) du champignon de rail (17) ou du patin de rail (18) après l'enfichage du tourillon pivot et de support (4) dans l'ouverture de rotation et de support (23) dans une position, basculée par rapport à l'extension longitudinale du rail de guidage (1), de la pièce de renvoi de câble (3) et avant le pivotement de la pièce de renvoi de câble (3) autour de l'axe de rotation de montage et entoure l'arête d'extrémité (14, 15) dans la position finale de montage.

6. Pièce de renvoi de câble selon la revendication 5, **caractérisée en ce qu'**un premier organe de prise par l'arrière (7) entoure l'arête d'extrémité (14) d'une branche centrale (10) du rail de guidage (1) et repose, dans la position finale de montage, par une section s'étendant de manière parallèle par rapport à l'arête d'extrémité (14) de la branche centrale (10), au niveau du côté, opposé au corps de base (30), du champignon de rail (17) ou du patin de rail (18) du rail de guidage (1), et **en ce qu'**une entaille d'introduction (36) servant à introduire l'arête d'extrémité (14) de la branche centrale (10) du rail de guidage (1) est prévue entre le premier organe de prise par l'arrière (7) et le corps de base (30).

7. Pièce de renvoi de câble selon au moins l'une quelconque des revendications précédentes 1, 5 ou 6, **caractérisée en ce qu'**un deuxième organe de prise par l'arrière (8) est réalisé au niveau d'une branche dépassant du corps de base (30), lequel entoure dans la position finale de montage un chanfrein (15) s'étendant depuis l'arête d'extrémité de la branche centrale (10) vers la butée d'enclenchement (16) de la première branche latérale (11) selon un angle obtus par rapport à l'arête d'extrémité (14) de la branche centrale (10) et repose, dans la position finale de montage, par une section plate, au niveau du côté, opposé au corps de base (30), du champignon de rail (17) ou du patin de rail (18) du rail de guidage (1).

8. Pièce de renvoi de câble selon la revendication 7, **caractérisée en ce que** le deuxième organe de prise par l'arrière (8) présente une arête (81) oblique correspondant à l'angle obtus du chanfrein (15) de telle manière que lors de l'enfichage du tourillon pivot et de support (4) de la pièce de renvoi de câble (3) dans l'ouverture de rotation et de support (23) au niveau du champignon de rail (17) ou du patin de rail (18) du rail de guidage (1), l'arête (81) oblique s'étend essentiellement de manière parallèle par rapport au chanfrein (15).

9. Pièce de renvoi de câble selon au moins l'une quelconque des revendications précédentes, **caractérisée en ce que** le tourillon pivot et de support (4) présente un chanfrein d'introduction (40) périphérique côté extrémité.

10. Pièce de renvoi de câble selon au moins l'une quelconque des revendications précédentes, **caractérisé en ce que** le corps de base (30) présente une butée d'entraîneur (32) pour un entraîneur, pouvant être ajusté le long du rail de guidage (1), du lève-vitre à câble, lequel est disposé de manière adjacente par rapport à la surface de butée (31) réalisée au niveau du corps de base (30), reposant, dans la position finale de montage, au niveau d'une partie des arêtes d'extrémité (19) du champignon de rail (17) oud u patin de rail (18).

11. Pièce de renvoi de câble selon au moins l'une quelconque des revendications précédentes, **caractérisée en ce qu'**un canal de câble (33) plié, de forme tubulaire pour un câble de lève-vitre est disposé dans le corps de base (30), lequel canal de câble présente, au niveau de son ouverture pointant de manière à s'éloigner du rail de guidage (1), un système de soutien de Bowden (34).

12. Pièce de renvoi de câble selon au moins l'une quelconque des revendications précédentes, **caractérisée en ce que** la pièce de renvoi de câble (3) est réalisée d'un seul tenant sous la forme d'une pièce moulée par injection.

13. Pièce de renvoi de câble selon au moins l'une quelconque des revendications 1 à 11, **caractérisée en ce que** le corps de base (30) et les éléments d'enclenchement et de verrouillage (5, 6, 7, 8) de la pièce de renvoi de câble (3) sont constitués d'une pièce moulée par injection composée d'un seul tenant, dans laquelle le tourillon pivot et de support (4) est injecté sous la forme d'une pièce en métal séparée, de préférence en acier.
